# EUROPEAN PATENT APPLICATION

(11) **EP 3 907 610 A1**
(43) Date of publication of application: **10.11.2021**
(21) Application number: 20193205.0
(22) Date of filing: 27.08.2020
(51) Int. Cl.: G06F 9/54

(54) **ORCHESTRATION SYSTEM FOR STREAM STORAGE AND PROCESSING**

(30) Priority: 05.05.2020 GB 202006632
(71) Applicant: Palantir Technologies Inc., Palo Alto, CA 94301 (US)
(72) Inventor: FINK, Robert, Palo Alto, CA California 94301 (US)
(74) Representative: Sayer, Robert David

(57) **Abstract**

A method, system and computer program product for orchestrating stream storage and processing is disclosed. The method, performed by one or more processors, may comprise receiving a query specifying a change to a first transformer of a data processing pipeline, the first transformer receiving an existing data stream of data records from a first data source and providing transformed data records to a first data sink. The method may also disclose identifying at least a first or second type of change to be implemented by the query and implementing the change specified in the query dependent on the identified first or second change type. The implementing may comprise one of: changing the first data transformer in accordance with the query and providing transformed output to the first data sink; and deploying a second transformer, being a changed version of the first transformer as specified in the query, for operating in parallel with the first transformer, and providing its transformed output to a second data sink.

## Description

### Field of the disclosure

The present disclosure relates to a method, system and computer program product for orchestrating stream storage and processing.

### Background

Cloud computing is a computing infrastructure for enabling ubiquitous access to shared pools of servers, storage, computer networks, applications and other data resources, which can be rapidly provisioned, often over the Internet. A data resource in this context is any form of executable software or data structure, usually but not exclusively for providing a service (and hence may be referred to as a data or software service) for example a data analysis application, a data transformation application, a report generating application, a machine learning process, a spreadsheet or a database. Data resources may ingest, transform and output data records. A data record, for example, may be a table or some other form of data object. Some companies provide cloud computing services for registered customers, for example manufacturing and technology companies, to create, store, manage and execute their own data resources. Sometimes, these data resources may interact with other software resources, for example those provided by the cloud platform provider. Certain data resources may be used to control external systems.

Datasets are often processed through processing pipelines, being a series of processing elements connected in series, where the output of one element is the input of the next. There may be hundreds, if not thousands, of such elements connected to different data sources and providing output to multiple data sinks. Datasets may be ingested in batches and processed in parallel. Sometimes the nature of what the datasets represent requires low-latency in terms of the passage of data from its data source, through one or more elements of the processing pipeline, to a destination such as a data sink or aggregator. For example, analysis of real-time sensor data collected on a cloud platform from an industrial plant or process requires that data to pass through the processing pipeline, e.g. to perform one or more transforms, with low latency otherwise it may be of little or no use. The analysed data may be used to control some part of the process, for example from a safety aspect. Batch transfers are therefore unsuitable, whereas data streaming can offer the required low latency.

Given that data sources, the datasets they provide, data streams and processing elements may be numerous, as may be the number and type of user analysis software at the receiving end, any change has the potential to be detrimental to the operation of the pipeline.

A change may comprise, for example, a change to a dataset (e.g. adding or removing a column) or to a transformer within the pipeline. Downstream processes or software may not be able to process such changed data if they are somehow reliant on the legacy datasets or transformations. Where the analysis at the receiving end is linked to process control, e.g. changing a parameter or shutting down a process, this can break the control process. With streaming data, this issue is exacerbated by the fact that data is moving quickly through pipelines and multiple users may be collaborating and therefore possibly changing different elements of the pipeline.

The approaches described in this section are approaches that could be pursued, but not necessarily approaches that have been previously conceived or pursued. Therefore, unless otherwise indicated, it should not be assumed that any of the approaches described in this section qualify as prior art merely by virtue of their inclusion in this section.

### Summary

According to some example embodiments, in a first aspect, there is described a method, performed by one or more processors, comprising: receiving a query specifying a change to a first transformer of a data processing pipeline, the first transformer receiving an existing data stream of data records from a first data source and providing transformed data records to a first data sink; identifying at least a first and/or second type of change to be implemented by the query; and implementing the change specified in the query dependent on the identified first or second change type, the implementing comprising one of: changing the first data transformer in accordance with the query and providing transformed output to the first data sink; and deploying a second transformer, being a changed version of the first transformer as specified in the query, for operating in parallel with the first transformer, and providing its transformed output to a second data sink.

The first and second change types may comprise breaking and non-breaking change types.

Responsive to identifying a non-breaking change type, the implementing may comprise changing the first data transformer of the existing data stream in accordance with the query, assigning an updated version code to said changed first transformer indicative of the non-breaking change type, the changed first data transformer being for transforming newly-received data records using the changed first transformer and providing the transformed output to the first data sink.

Responsive to identifying a non-breaking change type, the implementing may comprise deploying a second transformer, being a changed version of the first transformer, for operating in parallel with the first transformer, and for providing its transformed output to said second data sink, assigning an updated version code to the second transformer indicative of the non-breaking change type, and assigning an updated version code to the second data sink.

The method may further comprise deploying an aggregator associated with the first and second data sink version codes for providing to consumers of the existing data stream a unioned version of transformed data records from said first and second data sinks.

The method may further comprise causing the changed first transformer to retrieve, from the first data source, a predetermined number of prior data records transformed by the first transformer before implementing the change, and transforming said prior data records using the changed first transformer before transforming the newly-received data records.

The method may further comprise augmenting the data records produced by the changed first transformer to indicate the updated version code of the changed first data transformer.

The data records may include metadata indicating the updated version code.

Responsive to identifying a breaking change type, the implementing may comprise deploying a second transformer, being a changed version of the first transformer, for operating in parallel with the first transformer, and for providing its transformed output to said second data sink, assigning an updated version code to the second transformer indicative of the breaking change type, and assigning an updated version code to the second data sink.

Identifying the change type may comprise identifying a parameter associated with the query, the parameter being indicative of whether to perform (i) or (ii).

The parameter associated with the query may be a user-provided version code having a predetermined format indicative of the query implementing either a breaking or a non-breaking change.

The version code may comprise a format including at least two sub-sections and wherein a change in a specific one of said sub-sections from the current version of the first transformer indicates a non-breaking change and a change in a specific other of said sub-sections from the current version indicates a breaking change.

The version code may comprise the format x.y in any known order and wherein a change to x indicates a breaking change and a change to y indicates a non-breaking change.

Identifying the type of change may comprise identifying using static analysis on the query whether it implements a non-breaking change or a breaking change.

The method may be performed at an orchestration engine in communication with a streaming data store, providing the source and/or sink, and with a streaming processor for implementing one or more transformers.

The streaming data store may be an Apache Kafka streaming data store or the like.

The streaming processor may be Apache Flink or the like.

According to some example embodiments, in a second aspect, there is described a computer program, optionally stored on a non-transitory computer readable medium program which, when executed by one or more processors of a data processing apparatus, causes the data processing apparatus to carry out a method according to any preceding method definition.

According to some example embodiments, in a third aspect, there is described an apparatus configured to carry out a method according to any preceding method definition, the apparatus comprising one or more processors or special-purpose computing hardware.

### Brief Description of the Drawings:

Example embodiments will now be described by way of non-limiting example with reference to the accompanying drawings, in which:
FIG. 1 is a block diagram illustrating a network system comprising a group of application servers of a data processing platform according to embodiments of this specification;
FIG. 2 is a block diagram of a computer system according to embodiments of this specification;
FIG. 3 is a schematic diagram of a pipeline management tool according to example embodiments in communication with other portions of a computer network, such as that shown in FIG. 1;
FIG. 4 is a flow diagram showing processing operations performed by the pipeline management tool according to example embodiments;
FIGs 5A - 5I are schematic diagrams of a pipeline showing how the management tool may act on received queries to adapt the pipeline based on the query type.

### Detailed Description of Certain Embodiments

Reference will now be made in detail to specific example embodiments for carrying out the subject matter of the present disclosure. In the following description, specific details are set forth in order to provide a thorough understanding of the subject matter. It shall be appreciated that embodiments may be practiced without some or all of these specific details.

Example embodiments relate to methods, systems and computer programs for managing (or orchestrating) how streaming data is moved through one or more data processing pipelines, which in some embodiments may make use of proprietary or custom software system. Technical advantages may include how to handle streaming data in a way that enables change management and collaboration without breaking downstream data resources, such as analysis systems, visualisation systems and/or control systems.

The following definitions may apply herein.

A processing pipeline, herafter "pipeline", is a plurality of processing elements, hereafter "elements", connected in series, where the output of one element is the input of the next. There may be hundreds if not thousands of such elements connected between one or more data sources and one or more data sinks or aggregators. Elements may comprise data transformers or other processing functionality implemented in any suitable language such as Python, SQL, Java or Scala, to give some examples but in theory any language may be used. End users or end user programs may connect to data sinks of the pipeline to receive or extract datasets that have been processed by the pipeline, for example to perform analysis using their own software tools or those provided by, for example, a cloud service provider.

A stream is an ordered sequence of records generated by, or received from, a source relatively continuously, i.e. not in accumulated batches or chunks. A record may for example comprise a single line of a table which represents real-time data such as industrial sensor data, although embodiments are not limited to such. A record may for example comprise a single element data value from a table, although records are not necessarily tabular. For example, a record maybe in an object representation, e.g. using JSON, an XML document, an image, audio file or snippet. A record maybe defined as data that can be delivered continuously in small chunks or increments. The records may or may not be time-ordered, but often will be.

A stream source emits a stream to a stream consumer. A stream sink accepts a stream from a stream producer. A stream source and stream sink may be provided by a common data platform or data resource.

A stream transformer, hereafter "transformer", consumes a stream from a stream source and produces a (potentially different or potentially equal) stream into a stream sink. For example, a stream transformer may clean data values in the data record, remove duplicates, filter columns, add columns, combine columns and so on. A transformer is often provided as code.

A stream aggregator, hereafter "aggregator", consumes a stream from a source, but may not emit a stream to a sink.

Transformers and aggregators may be implemented by some form a stream transformation code, written in programming languages such as Python, SQL, or Java. Code may be released by versions having associated version or release codes in any suitable format, e.g. T@x.y.z whereby T represents the transformer, and x.y.z is an example version format, for example following the Semantic Versioning or another suitable versioning scheme. The first part "x" of the version format may be considered the most significant part, whereas the one or more subsequent parts are less in the sense that "y" is less significant that "x" and "z" is less significant that "y". There may be two or more sub parts.

Transformers may connect stream sources with stream sinks by referencing source names or identifiers.

For example, open source software systems such as Apache Kafka ("Kafka") can act as a persistent stream sink or stream source, and Apache Flink ("Flink) can implement transformers, that is execute transforms (e.g. from data records moving from a Kafka stream source to a Kafka stream sink) and aggregate (e.g. a job that consumes a Kafka stream, updates an in-memory data structure, and exposes views on the data structure via an API). Another proprietary software system that can act as a stream sink is Elasticsearch. However, for the avoidance of doubt, any system, e.g. a database, that can consume records incrementally may be suitable, e.g. Postgres, Redshift, Oracle, MySQL etc.

Stream consumers may specify the start position of an incoming stream in two ways: in a START mode, all records from the start are presented, in LATEST mode, the stream starts with the latest/youngest record available in the stream source and continues from there.

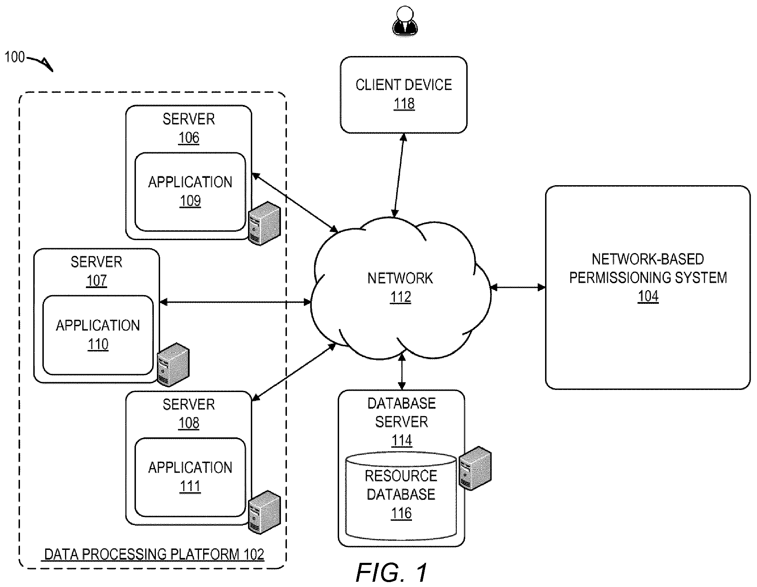

FIG. 1 is a network diagram depicting a network system 100 comprising a data processing platform 102 in communication with a network-based permissioning system 104 (hereafter "permissioning system") configured for registering and evaluating access permissions for data resources to which a group of application servers 106-108 share common access, according to an example embodiment. Consistent with some embodiments, the network system 100 may employ a client-server architecture, though the present subject matter is, of course, not limited to such an architecture, and could equally well find application in an event-driven, distributed, or peer-to-peer architecture system, for example. Moreover, it shall be appreciated that although the various functional components of the network system 100 are discussed in the singular sense, multiple instances of one or more of the various functional components may be employed.

The data processing platform 102 includes a group of application servers, specifically, servers 106-108, which host network applications 109 -111, respectively. The network applications 109-111 hosted by the data processing platform 102 may collectively compose an application suite that provides users of the network system 100 with a set of related, although independent, functionalities that are accessible by a common interface. For example, the network applications 109-111 may compose a suite of software application tools that can be used to analyse data to develop various insights about the data, and visualize various metrics associated with the data. To further this example, the network application 109 may be used to analyse data to develop particular metrics with respect to information included therein, while the network application 110 may be used to render graphical representations of such metrics. It shall be appreciated that although FIG. 1 illustrates the data processing platform 102 as including a particular number of servers, the subject matter disclosed herein is not limited to any particular number of servers and in other embodiments, fewer or additional servers and applications may be included.

The applications 109-111 may be associated with a first organisation. One or more other applications (not shown) may be associated with a second, different organisation. These other applications may be provided on one or more of the application servers 106, 107, 108 which need not be specific to a particular organisation. Where two or more applications are provided on a common server 106-108 (or host), they may be containerised which as mentioned above enables them to share common functions.

Each of the servers 106-108 may in communication with the network-based permissioning system 104 over a network 112 (e.g. the Internet or an intranet). Each of the servers 106-108 are further shown to be in communication with a database server 114 that facilitates access to a resource database 116 over the network 112, though in other embodiments, the servers 106-108 may access the resource database 116 directly, without the need for a separate database server 114. The resource database 116 may stores other data resources that may be used by any one of the applications 109-111 hosted by the data processing platform 102.

In other embodiments, one or more of the database server 114 and the network-based permissioning system 104 may be local to the data processing platform 102; that is, they may be stored in the same location or even on the same server or host as the network applications 109, 110, 111.

As shown, the network system 100 also includes a client device 118 in communication with the data processing platform 102 and the network-based permissioning system 104 over the network 106. The client device 118 communicates and exchanges data with the data processing platform 102.

The client device 118 may be any of a variety of types of devices that include at least a display, a processor, and communication capabilities that provide access to the network 106 (e.g., a smart phone, a tablet computer, a personal digital assistant (PDA), a personal navigation device (PND), a handheld computer, a desktop computer, a laptop or netbook, or a wearable computing device), and may be operated by a user (e.g., a person) to exchange data with other components of the network system 100 that pertains to various functions and aspects associated with the network system 100 and its users. The data exchanged between the client device 118 and the data processing platform 102 involve user-selected functions available through one or more user interfaces (UIs). The UIs maybe specifically associated with a web client (e.g., a browser) or an application 109-111 executing on the client device 118 that is in communication with the data processing platform 102. For example, the network-based permissioning system 104 provides user interfaces to a user of the client device 118 (e.g., by communicating a set of computer-readable instructions to the client device 118 that cause the client device 118 to display the user interfaces) that allow the user to register policies associated with data resources stored in the resource database 116.

In some embodiments, the servers 106 - 108 or the database server 114 may comprise some form of stream storage functionality, such as an application or system providing a stream source or stream sink. The stream storage may receive real-time data or data records from one or more remote system such as an industrial facility whereby multiple sensors generate values representative of respective measureable parameters such as temperature, pressure, flow rate, volume, voltage, current, and so on. The data records may be represented in any suitable format, for example as a single line or row of data comprising multiple fields or columns, e.g. timestamp, sensor identifier and pressure.

In some embodiments, one or more of the servers 106 - 108 or the database server 114 may comprise some form of stream processing functionality, such as an application or system for receiving or retrieving the ordered data records as part of a stream and for performing one or more transforms.

In some embodiments, the servers 106 - 108 or the database server 114 may comprise an orchestration system which provides orchestration or control over the stream storage and stream processing functionality, as will be explained later on. In overview, users, such as a user of client device 118, may send queries to the orchestrator system which provides an application programming interface (API) for interpreting the query and controlling how to manage streams and transforms by interaction with said stream storage and stream processing functionality. The orchestration system may act as a proxy to which queries are diverted by the stream storage and/or stream processing functionality to ensure compliance with change or collaboration procedures as mentioned herein.

In some embodiments, the orchestration system of example embodiments may be provided on a separate server (not shown) which forms part of the network system 100 of FIG. 1.

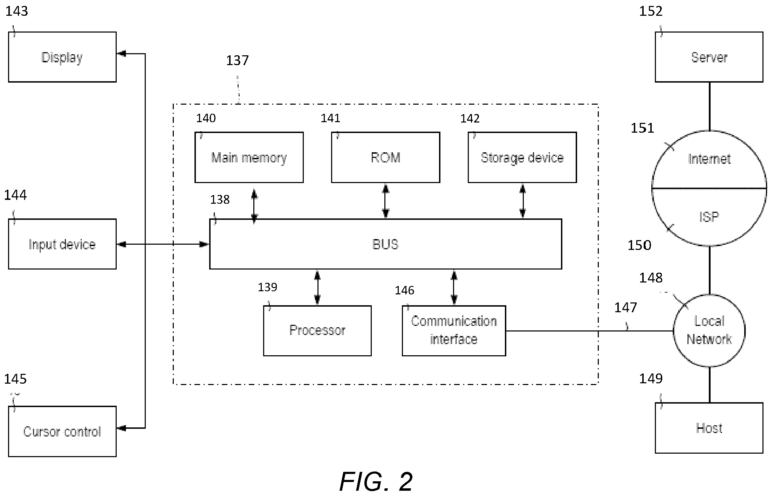

Referring to FIG. 2, a block diagram of an exemplary computer system 137, which may comprise the data processing platform 102, one or more of the servers 106-108, the database server 114 and/or the network-based permissioning system 104, consistent with examples of the present specification is shown. The exemplary computer system 137 may also comprise the orchestration system of example embodiments to be described herein.

Computer system 137 includes a bus 138 or other communication mechanism for communicating information, and a hardware processor 139 coupled with bus 138 for processing information. Hardware processor 139 can be, for example, a general purpose microprocessor. Hardware processor 139 comprises electrical circuitry.

Computer system 137 includes a main memory 140, such as a random access memory (RAM) or other dynamic storage device, which is coupled to the bus 138 for storing information and instructions to be executed by processor 139. The main memory 140 can also be used for storing temporary variables or other intermediate information during execution of instructions by the processor 139. Such instructions, when stored in non-transitory storage media accessible to the processor 139, render the computer system 137 into a special-purpose machine that is customized to perform the operations specified in the instructions.

Computer system 137 further includes a read only memory (ROM) 141 or other static storage device coupled to the bus 138 for storing static information and instructions for the processor1 139. A storage device 142, such as a magnetic disk or optical disk, is provided and coupled to the bus 138 for storing information and instructions.

Computer system 137 can be coupled via the bus 138 to a display 143, such as a cathode ray tube (CRT), liquid crystal display, or touch screen, for displaying information to a user. An input device 144, including alphanumeric and other keys, is coupled to the bus 138 for communicating information and command selections to the processor 139. Another type of user input device is cursor control 145, for example using a mouse, a trackball, or cursor direction keys for communicating direction information and command selections to the processor 139 and for controlling cursor movement on the display 143. The input device typically has two degrees of freedom in two axes, a first axis (for example, x) and a second axis (for example, y), that allows the device to specify positions in a plane.

Computer system 137 can implement the techniques described herein using customized hard-wired logic, one or more ASICs or FPGAs, firmware and/or program logic which in combination with the computer system causes or programs computer system 137 to be a special-purpose machine. According to some embodiments, the operations, functionalities, and techniques disclosed herein are performed by computer system 137 in response to the processor 139 executing one or more sequences of one or more instructions contained in the main memory 140. Such instructions can be read into the main memory 40 from another storage medium, such as storage device 142. Execution of the sequences of instructions contained in main memory 140 causes the processor 139 to perform the process steps described herein. In alternative embodiments, hard-wired circuitry can be used in place of or in combination with software instructions.

The term "storage media" as used herein refers to any non-transitory media that stores data and/or instructions that cause a machine to operate in a specific fashion. Such storage media can comprise non-volatile media and/or volatile media. Non-volatile media includes, for example, optical or magnetic disks, such as storage device 142. Volatile media includes dynamic memory, such as main memory 140. Common forms of storage media include, for example, a floppy disk, a flexible disk, hard disk, solid state drive, magnetic tape, or any other magnetic data storage medium, a CD-ROM, any other optical data storage medium, any physical medium with patterns of holes, a RAM, a PROM, and EPROM, a FLASH-EPROM, NVRAM, any other memory chip or cartridge.

Storage media is distinct from, but can be used in conjunction with, transmission media. Transmission media participates in transferring information between storage media. For example, transmission media includes coaxial cables, copper wire and fibre optics, including the wires that comprise bus 138. Transmission media can also take the form of acoustic or light waves, such as those generated during radio-wave and infra-red data communications.

Various forms of media can be involved in carrying one or more sequences of one or more instructions to processor 139 for execution. For example, the instructions can initially be carried on a magnetic disk or solid state drive of a remote computer. The remote computer can load the instructions into its dynamic memory and send the instructions over a telephone line or other transmission medium using a modem. A modem local to computer system 137 can receive the data on the telephone line or other transmission medium and use an infra-red transmitter to convert the data to an infra-red signal. An infra-red detector can receive the data carried in the infra-red signal and appropriate circuitry can place the data on bus 138. Bus 138 carries the data to the main memory 140, from which the processor 139 retrieves and executes the instructions. The instructions received by the main memory 140 can optionally be stored on the storage device 142 either before or after execution by the processor 139.

Computer system 137 also includes a communication interface 146 coupled to the bus 138. The communication interface 146 provides a two-way data communication coupling to a network link 147 that is connected to a local network 148. For example, the communication interface 146 can be an integrated services digital network (ISDN) card, cable modem, satellite modem, or a modem to provide a data communication connection to a corresponding type of telephone line. As another example, the communication interface 146 can be a local area network (LAN) card to provide a data communication connection to a compatible LAN. Wireless links can also be implemented. In any such implementation, the communication interface 146 sends and receives electrical, electromagnetic or optical signals that carry digital data streams representing various types of information.

The network link 147 typically provides data communication through one or more networks to other data devices. For example, the network link 147 can provide a connection through the local network 148 to a host computer 149 or to data equipment operated by an Internet Service Provider (ISP) 150. The ISP 150 in turn provides data communication services through the world wide packet data communication network now commonly referred to as the "Internet" 151. The local network 148 and internet 151 both use electrical, electromagnetic or optical signals that carry digital data streams. The signals through the various networks and the signals on the network link 147 and through the communication interface 146, which carry the digital data to and from the computer system 137, are example forms of transmission media.

The computer system 137 can send messages and receive data, including program code, through the network(s), network link 147 and communication interface 146. For example, a first application server 106 may transmit data through the local network 148 to a different application server 107, 108.

The data processing platform 102 may be a containerised data processing platform.

In this regard, a containerised data platform comprises "containers" which hold one or more applications, and associated data libraries, that are guaranteed to be co-located on the same host machine and which can share resources. Such software platforms may also provide a set of primitives which collectively provide mechanisms for deploying, maintaining and scaling applications. A basic scheduling unit may be called a pod. A pod may consist of one or more containers.

### Orchestration System

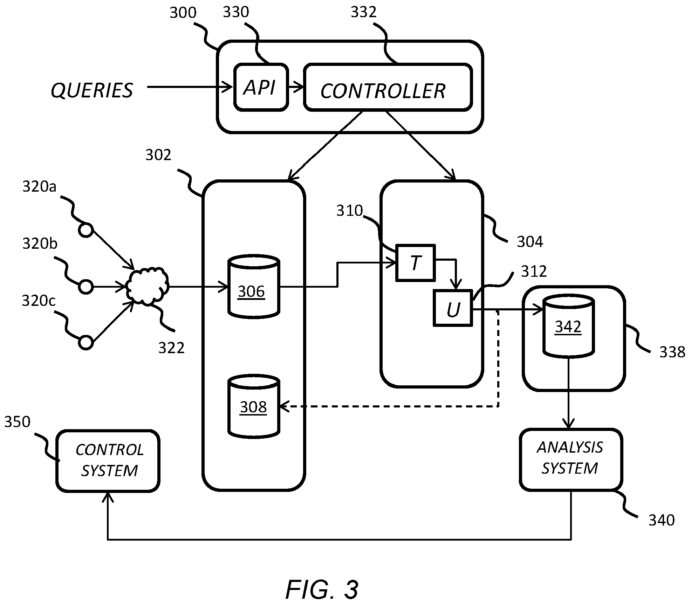

FIG. 3 is a schematic diagram of an example embodiment of the above-mentioned orchestration system, herein denoted by reference numeral 300. The orchestration system 300 may be implemented in hardware, software, firmware or a combination thereof. The orchestration system 300 is in data communication, for example over a network or direct connection, with a stream storage system 302, e.g. Kafka, and a stream processing system 304, e.g. Flink.

The stream storage system 302 and the stream processing system 304 collectively provide a streaming service between one or more streaming sources 306 and one or more streaming sinks 308, here shown on the same stream storage system. However, a separate stream storage system 338 may provide one or more streaming sinks 342 for receiving transformed data records.

The stream storage system 302 may be configured to receive data records, for example real-time data records, from one or more data sources 320a, 320b, 320c, which may be industrial sensors, upstream database change logs, upstream streaming data sources, Internet of Things (IoT) devices or other log producers, to give some examples. The received data maybe in the form of data records, e.g. very small chunks of data, possibly, but not necessarily as indicated above, a single row of data comprising multiple columns or fields. The received data may be received via a network 322, which may correspond to the network 112 shown in FIG. 1.

The stream processing system 304 may implement one or more transformers 310, 312. Each of the transformers 310, 312 may perform one or more transforms using transform code. In this example, there is implemented a first transform 310, the output of which provides input to a second transform 312. The output from the second transform 312 is provided to the one or more streaming sinks 308, 342. In other embodiments, the output may be provided to an aggregator. Any number of transforms maybe provided in any configuration, e.g. multiple series and parallel configurations.

An analysis system 340, which may be on a client computer or may be an application 109, 110, 111 of one or more of the FIG. 1 servers 106, 107, 108, may connect to one of the streaming sinks 308, 342 in order to ingest and process said streamed and transformed data to generate analysis results, e.g. visualisations or control functions, which in some embodiments may be used for control purposes to directly control part of an industrial system. The analysis system 340 may be configured to operate on received data records having a defined and expected format, e.g. columns "a, b, c" which may conform to a particular schema. If the received data does not conform to that format, e.g. comprises less columns or comprises re-named columns or a column is of a different type, then the analysis system may break and produce no meaningful output. Where the analysis system 340 is connected to a control system 350, e.g. providing a feedback control signal to shut down or manage some aspect related to the system under analysis, then the control system will not function.

The orchestration system 300 may configured to receive one or more queries via an API 330. The one or more queries may encode the transformer or aggregator logic, whereby the orchestration system 300 is configured to update the stream processing system 304 and/or the stream storage system 302 based on the queries received through the API 330. Multiple APIs may be provided, e.g. one for Python queries, one for SQL queries and so on. The API 330 may be associated with a controller 332 which performs certain functions in relation to the stream storage system 302 and stream processing system 304, which may be conditional on the type of query received. In this way, queries need not be made direct to the stream storage system 302 and the stream processing system 304, which will involve separate queries that are not necessarily compliant with requirements.

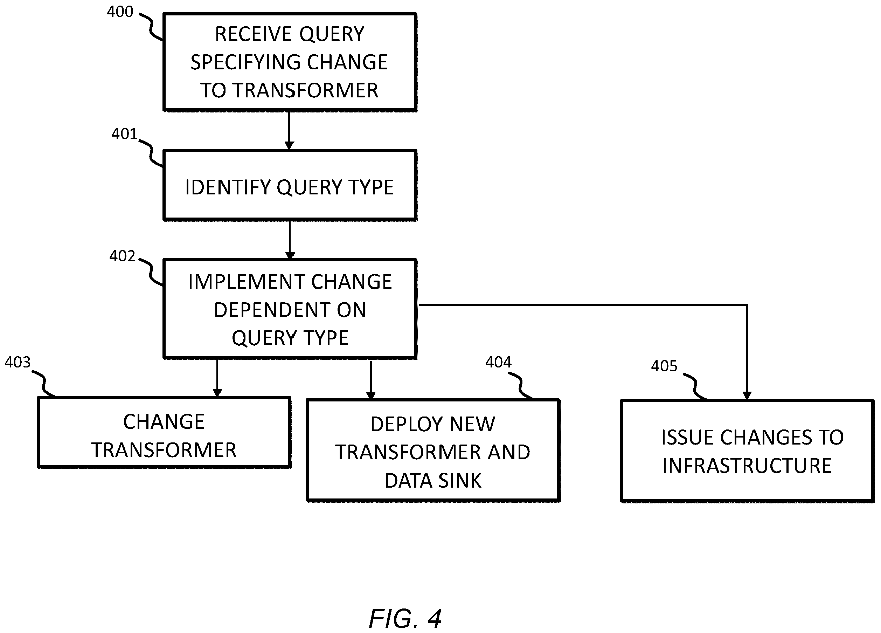

Referring to FIG. 4, a flow diagram is shown illustrating processing operations that maybe performed at the orchestration system 300 in conjunction with the stream storage system 302 and/or stream processing system 304. The operations may be performed in software, hardware, firmware or a combination thereof.

A first operation 400 may comprise receiving a query specifying a change to a first transformer of a data processing pipeline, the first transformer receiving an existing data stream of data records from a first data source and providing transformed data records to a first data sink. In this context, a data processing pipeline may comprise, for example, the flow or stream of data records between the streaming source 306 and streaming sink 308 or 342 shown in FIG. 3, via the one or more transformers 310, 312.

A second operation 401 may comprise identifying a query type, e.g. belonging to at least a first and second type of change to be implemented by the query.

A third operation 402 may comprise implementing the change specified in the query dependent on the identified change type. Implementing may comprise one of the following sub-operations, including at least:
(i) changing (403) the first data transformer in accordance with the query and providing transformed output to the existing data sink; or
(ii) deploying (404) a second transformer, being a changed version of the first transformer as specified in the query, which maybe suitable for operating in parallel with the first transformer, and providing its transformed output to a second data sink.

Another operation 405 indicates the possibility to issue changes to the infrastructure, e.g. the stream storage system 302 and/or the stream processing system 304 so as to procure one or more new streams and/or to remove one or more existing streams.

The orchestration system 300 may also be configured to generate indications of updates to the transformers and the change type by way of version codes. A version code, sometimes referred to as a version number or release number, is a label indicating the update chronology and hierarchy. The term "code" is used because the label is not necessarily a number, but for simplicity, we will assume it is. Any suitable version code format can be used.

In example embodiments, and as will become clear, a version code may be associated with the query. That is, a user or process passing a query to the orchestration system 300 may indicate somehow using a version code to be assigned to the changed transform what sort of change is involved.

Two types of change type will be addressed herein, although embodiments are not restricted to such. The first type is a breaking change and the second type is a non-breaking change.

A breaking change refers to a change specified in a query that potentially causes other software resources, dependent either directly or indirectly on what is being changed, to fail or break. For example, the analysis system 340 in FIG. 3 may require transformed data records comprising fields "a, b, c." If a change removes, say, field "c" from the transformed data records, then the analysis system 340 will break or fail. If a change changes renames "c" to "d", then the analysis system 340 will break of fail.

A non-breaking change refers to a change specified in a query that is not a breaking change and therefore will not cause other software resources to fail. For example, adding a field "d" to the existing fields "a, b, c" may not cause a sufficiently lenient analysis system 340 to break or fail because the required data "a, b, c" remains.

A user or process that wishes to implement a breaking or non-breaking change can indicate said change in any suitable manner, and one example is by means of the version code. For example, a query that references a transform "T" having version code 1.0.0 with a query of the general format T@1.1.0 may indicate the non-breaking change by means of changing the second part of said code. A breaking change may be indicated by changing the first, more significant part using T@2.0.0, for example.

Upon receiving the query according to whichever version convention is employed, the orchestrator 300 may implement the query based on the change type identified, as will be explained below with regard to examples.

Another method of determining type of change is through static analysis of the query. Static analysis involves examining via a static analysis program the query code, without executing it, to ascertain its behaviour or derived output. The derived output may be compared with expected input of downstream transformers or the analysis system to ascertain whether or not the query is a breaking or non-breaking change. Depending on the type, the current version code associated with the transformer being changed can be automatically updated, for example using the above convention.

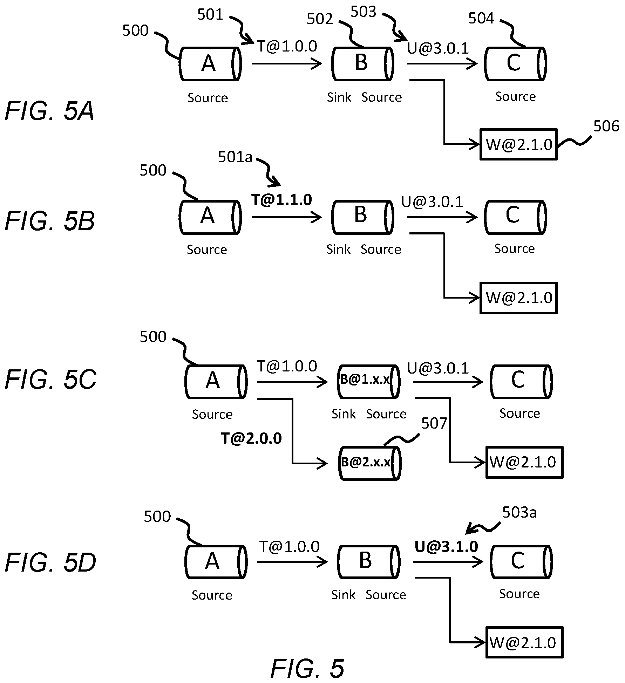

FIGs. 5A - 5I illustrate various implementations provided by the orchestrator 300 in accordance with various example embodiments. These examples are by no means exhaustive.

FIG. 5A indicates a "current" state implemented by, for example, the FIG. 3 system. A data source "A" 500 provides records via a transformer "T" 501 having version 1.0.0 to a data sink/source "B" 502. Said data sink/source "B" 502 provides records via a transformer U 503 having version 3.0.1 to data source "C" 504. The data sink/source "B" 502 also provides records to an aggregator "W" 506 having version 2.1.0.

FIG. 5B indicates what happens to the FIG. 5A pipeline following receipt of a query specifying a non-breaking change received at the orchestrator 300. We assume that the orchestrator 300 processes a query having version 1.1.0 (whether specified by a user, a user process or using static analysis) identifying it as a non-breaking change because the second part of the version code is that which changes. For example, the query may be a SELECT SQL query that preserves or selects a field previously filtered out. In the shown example, the transformer "T" 501 is changed, that is the "T" code is updated in the underlying stream processing system 304, e.g. from version 1.0.0 to 1.1.0, indicated by reference numeral 501a, in accordance with the query, and provides subsequent, transformed data records to the same data sink/source "B" 502. Because T@1.1.0 is a non-breaking change, subsequent parts of the pipeline will not be adversely affected. Specifically, this may involve stopping the operation of T@1.0.0, starting T@1.1.0 and ensuring that the input to transformer "T" 501 is stitched correctly, i.e. if the last record processed by T@1.0.0 was r_n then the first record processed by T@1.1.0 is r_(n+1). This form of stitching is called a CONTINUE mode. In contrast to the CONTINUE mode described above, if T were configured in a REPLAY mode, then the first record processed by T@1.1.0 would be r_o (the first record available in A, or the first record available given A's SLAs on history / on A's retention configuration), independently of the value of n in the last record r_n processed by T@1.0.0.

In contrast, FIG. 5C indicates what happens to the FIG. 5A pipeline following receipt of a query specifying a breaking change received at the orchestrator 300. We assume that the orchestrator 300 processes a query having version 1.0.0 (whether specified by a user, a user process or using static analysis) identifying it as a breaking change because the first part of the version code is that which changes. For example, the query may be a query that renames one or more fields in the output records. In the shown example, the transformer "T" 501 is changed in accordance with the query, has its version updated to T@2.0.0, and provides subsequent, transformed data records to a different data sink/source "B@2.x.x" 507. That is, the orchestrator 300 may deploy a new data sink/source 507 in the stream storage system 302 to which data records transformed according to the changed version are provided, whilst the existing transform T@1.0.0 is left running in the stream processing system 304 in order to serve existing consumers that can migrate to the new one later-on, as and when their own processes, e.g. analysis applications, are compliant with the updated data schema of transform T@2.0.0. Two streams are therefore made available. In terms of naming the new data sink/source B@2.x.x 507 with the "x" wildcards, this enables any subsequent non-breaking change queries to produce records into the same data sink/source. So, a change to make T@2.0.0 become T@2.1.0 should allow the transformed records still go to B@2.x.x 507. Similarly, the existing data sink/source "B" 502 may be re-named "B@1.x.x" for the same reason.

FIG. 5D indicates what happens to the FIG. 5A pipeline following receipt of another query specifying a non-breaking change to transform "U" 503 received at the orchestrator 300. We assume that the orchestrator 300 processes a query having version 3.0.1 (whether specified by a user, a user process or using static analysis). In the shown example, the transformer "U" 503 is changed, indicated by reference numeral 503a, in accordance with the query, has its version updated to 3.1.0, and provides subsequent, transformed data records to the same data source "C" 504. Here, we can reconnect the source/sink "B" 502 either in CONTINUE or in REPLAY mode (as mentioned above) after deploying U@3.1.0 503a.

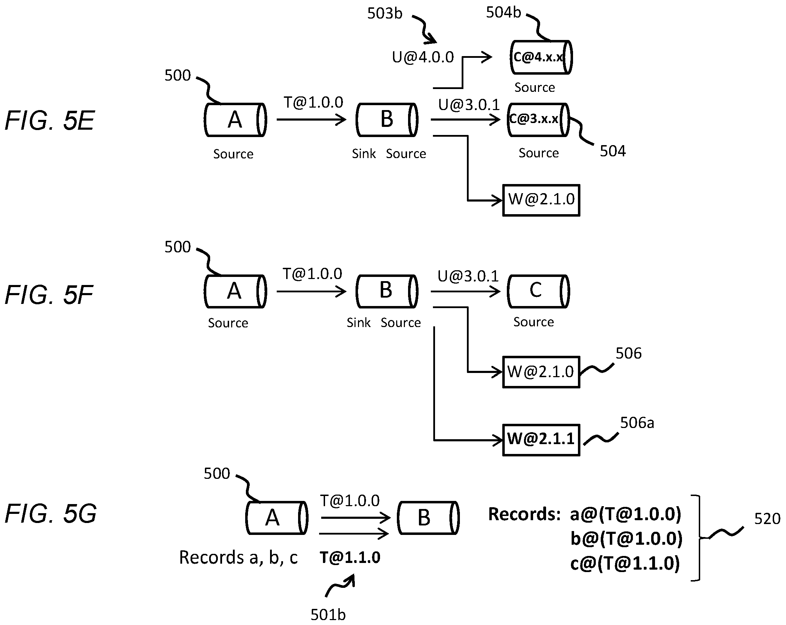

FIG. 5E indicates what happens to the FIG. 5A pipeline following receipt of a query specifying a breaking change to transform "U" 503 received at the orchestrator 300. We assume that the orchestrator 300 processes a query having version 4.0.0 (whether specified by a user, a user process or using static analysis) identifying it as a breaking change because the first part of the version code is that which changes. In the shown example, the transformer "U" 503 is changed in accordance with the query, has its version updated to U@4.0.0, and provides subsequent, transformed data records to a different data sink/source C@4.x.x 504b. That is, the orchestrator 300 may deploy a new data sink/source 504b to which data records transformed according to the changed version are provided, whilst the existing transform U@3.0.1 is left running in order to serve existing consumers that can migrate to the new one later-on, as and when their own processes, e.g. analysis applications, are compliant. Two streams are therefore made available. In terms of naming the new data sink/source C@4.x.x 504b with the "x" wildcards, this enables any subsequent non-breaking change queries to produce records into the same data sink/source. Similarly, the existing data sink/source "C" 504 maybe re-named "C@3.x.x" 504a for the same reason.

FIG. 5F indicates what happens to the FIG. 5A pipeline following receipt of a query specifying a change to the aggregator "W" 506 received at the orchestrator 300. The aggregator "W" 506 does not produce an output stream and may be for example a service implementing a user-facing API. As such, it may not be appropriate to switch the aggregator "W" 506 (having version code 2.1.0) off, e.g. to switch-on a new aggregator 506a with version code 2.1.1 on, even if a non-breaking change; this will break existing clients of W@2.1.0 506. Hence, the orchestrator 300 may deploy W@2.1.1 in parallel with W@2.1.0 and provide a switch-over or migration, for a example a blue/green migration that slowly moves API traffic from W@2.1.0 to W@2.1.1, at the appropriate time.

As well as the implementation phase putting changes into effect, example embodiments of the orchestrator 300 may enable downstream transforms, sinks/sources, aggregators and/or analysis systems to know from which versions data the records come from.

For example, for queries specifying non-breaking changes, for example as explained above with reference to FIGs. 5B and 5D, there may be two alternative models. In the explained examples, and with reference to FIG. 5G, the orchestrator 300 may augment the payload data with control records in the same output stream, e.g. as metadata 520. In this way, the stream or the records may indicate to, e.g. consumers, what "T" version produced them. Alternatively, the orchestrator 300 may interleave data records and separate control records, e.g., as metadata 520, in the same output stream. Consumers of such a stream can infer the T version of each data record by inspecting the latest received control record and extracting their version from it.

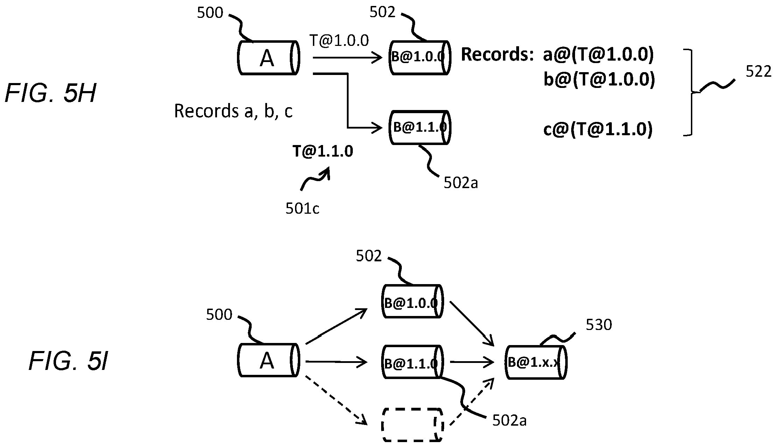

With reference to FIG. 5H, an alternative method is for the orchestrator 300 to deploy a new transform T@1.1.0 501c and connect it to a new sink/source B@1.1.0 502a (similar to the case for the breaking change case) and to stop the original version T@1.0.0 501 at an appropriate time with regard to the CONTINUE mode. This approach may be referred to as "slicing". Again, metadata 522 can be appended to the transformed data records to indicate what transformation versions were used, but it not necessary. With reference to FIG. 5I, in order to consume records from the two sliced data sink/sources 502, 502a, an aggregator 522 may be deployed by the orchestrator 300 for all B@1.x.x record slices so that consumers from sink/source "B@1.x.x" can read from a single logical stream. It effectively provides a union of B records slices in the correct order. The individual B@1.0.0 and B@1.1.0 sink/sources would be treated as internal APIs so that users only have to ask for data w.r.t. B@1.x.x.

Example embodiments provide via the use of an orchestrator 300 methods, systems and computer programs whereby queries are processed prior to interaction with proprietary products such as stream storage systems and/or stream processing system to improve change and collaboration management. Change management ensures that downstream processes are not broken by means of how queries are implemented depending on the change type. Version control ensures that consumer systems are able to understand from which sink or aggregator the data comes from and migration can be handled appropriately. In architectures and implementations involving many hundreds, if not thousands of users, the version controls ensure that the changes of one user do not affect those of another user adversely.

The orchestrator 300 disclosed herein may act as a proxy, ensuring that all queries pass through the orchestrator. This may be the case even if the query is sent to, for example, the stream storage system or stream processing system, which may be configured to divert such queries to the orchestrator. For example, the orchestrator may comprise the same API as Kafka, but translates a query for "connect to stream "B"" as "connect to stream "B.x.x"" for example.

Individual data transforms and aggregators may be configured to operate in various modes. For example, some may operate in a CONTINUE mode whereby only new data is received from a source at the time the transform or aggregator is deployed to the streaming system, whereas some may operate in a REPLAY mode whereby a predetermined amount of historic data may be requested at the time a changed transform is implemented. For example, the analysis may be performing aggregation of historic data, and it would be inappropriate to aggregate records transformed with a first transform version together with some data from a second, new data transform. As such, if the orchestrator 300 is requested to operate in a REPLAY mode for a particular query, the change may involve requesting a predetermined amount (e.g. time frame of 1 hour, 1 day, or all data available in the source) of historic data to re-perform the new transformer or aggregator with, as well as new data.

Alternatively, or additionally to using metadata to indicate the transformers used for particular data records, in some embodiments, time stamps associated with data records may be used as a reference point by consumers to request from the orchestrator 300 which transformer or transformers produced said data record.

Each of the processes, methods, and algorithms described in the preceding sections may be embodied in, and fully or partially automated by, code modules executed by one or more computer systems or computer processors comprising computer hardware. The processes and algorithms may be implemented partially or wholly in application-specific circuitry.

In some embodiments, the servers 106 - 108 or the database server 114 may comprise some form of stream storage functionality, such as an application or system providing a stream source or stream sink. The stream storage may receive real-time data or data records from one or more remote system such as an industrial facility whereby multiple sensors generate values representative of respective measureable parameters such as temperature, pressure, flow rate, volume, voltage, current, and so on. The data records may be represented in any suitable format, for example as a single line or row of data comprising multiple fields or columns, e.g. timestamp, sensor identifier and pressure.

In some embodiments, the servers 106 - 108 or the database server 114 may comprise some form of stream processing functionality, such as an application or system for receiving or retrieving the ordered data records as part of a stream and for performing one or more transforms.

The various features and processes described above may be used independently of one another, or may be combined in various ways. All possible combinations and sub combinations are intended to fall within the scope of this disclosure. In addition, certain method or process blocks may be omitted in some implementations. The methods and processes described herein are also not limited to any particular sequence, and the blocks or states relating thereto can be performed in other sequences that are appropriate. For example, described blocks or states may be performed in an order other than that specifically disclosed, or multiple blocks or states may be combined in a single block or state. The example blocks or states may be performed in serial, in parallel, or in some other manner. Blocks or states may be added to or removed from the disclosed example embodiments. The example systems and components described herein may be configured differently than described. For example, elements may be added to, removed from, or rearranged compared to the disclosed example embodiments.

Conditional language, such as, among others, "can," "could," "might," or "may," unless specifically stated otherwise, or otherwise understood within the context as used, is generally intended to convey that certain embodiments include, while other embodiments do not include, certain features, elements and/or steps. Thus, such conditional language is not generally intended to imply that features, elements and/or steps are in any way required for one or more embodiments or that one or more embodiments necessarily include logic for deciding, with or without user input or prompting, whether these features, elements and/or steps are included or are to be performed in any particular embodiment.

Any process descriptions, elements, or blocks in the flow diagrams described herein and/or depicted in the attached figures should be understood as potentially representing modules, segments, or portions of code which include one or more executable instructions for implementing specific logical functions or steps in the process. Alternate implementations are included within the scope of the embodiments described herein in which elements or functions may be deleted, executed out of order from that shown or discussed, including substantially concurrently or in reverse order, depending on the functionality involved, as would be understood by those skilled in the art.

It should be emphasized that many variations and modifications may be made to the above-described embodiments, the elements of which are to be understood as being among other acceptable examples. All such modifications and variations are intended to be included herein within the scope of this disclosure. The foregoing description details certain embodiments of the invention. It will be appreciated, however, that no matter how detailed the foregoing appears in text, the invention can be practiced in many ways. As is also stated above, it should be noted that the use of particular terminology when describing certain features or aspects of the invention should not be taken to imply that the terminology is being re-defined herein to be restricted to including any specific characteristics of the features or aspects of the invention with which that terminology is associated. The scope of the invention should therefore be construed in accordance with the appended claims and any equivalents thereof.

## Claims

1. A method, performed by one or more processors, comprising:
receiving a query specifying a change to a first transformer of a data processing pipeline, the first transformer receiving an existing data stream of data records from a first data source and providing transformed data records to a first data sink;
identifying at least a first and/or second type of change to be implemented by the query; and
implementing the change specified in the query dependent on the identified first or second change type, the implementing comprising one of:
(i) changing the first data transformer in accordance with the query and providing transformed output to the first data sink; and
(ii) deploying a second transformer, being a changed version of the first transformer as specified in the query, for operating in parallel with the first transformer, and providing its transformed output to a second data sink.

2. The method of claim 1, wherein the first and second change types are breaking and non-breaking change types.

3. The method of claim 2, wherein, responsive to identifying a non-breaking change type, the implementing comprises changing the first data transformer of the existing data stream in accordance with the query, assigning an updated version code to said changed first transformer indicative of the non-breaking change type, the changed first data transformer being for transforming newly-received data records using the changed first transformer and providing the transformed output to the first data sink.

4. The method of claim 2, wherein, responsive to identifying a non-breaking change type, the implementing comprises deploying a second transformer, being a changed version of the first transformer, for operating in parallel with the first transformer, and for providing its transformed output to said second data sink, assigning an updated version code to the second transformer indicative of the non-breaking change type, and assigning an updated version code to the second data sink.

5. The method of claim 4, further comprising deploying an aggregator associated with the first and second data sink version codes for providing to consumers of the existing data stream a unioned version of transformed data records from said first and second data sinks.

6. The method of any of claims 3 to 5, further comprising causing the changed first transformer to retrieve, from the first data source, a predetermined number of prior data records transformed by the first transformer before implementing the change, and transforming said prior data records using the changed first transformer before transforming the newly-received data records.

7. The method of any of claims 3 to 6, further comprising augmenting the data records produced by the changed first transformer to indicate the updated version code of the changed first data transformer.

8. The method of claim 7, wherein the data records include metadata indicating the updated version code.

9. The method of claim 2, wherein, responsive to identifying a breaking change type, the implementing comprises deploying a second transformer, being a changed version of the first transformer, for operating in parallel with the first transformer, and for providing its transformed output to said second data sink, assigning an updated version code to the second transformer indicative of the breaking change type, and assigning an updated version code to the second data sink.

10. The method of any preceding claim, wherein identifying the change type comprises identifying a parameter associated with the query, the parameter being indicative of whether to perform (i) or (ii).

11. The method of claim 10, wherein the parameter associated with the query is a user-provided version code having a predetermined format indicative of the query implementing either a breaking or a non-breaking change.

12. The method of claim 11, wherein the version code comprises a format including at least two sub-sections and wherein a change in a specific one of said sub-sections from the current version of the first transformer indicates a non-breaking change and a change in a specific other of said sub-sections from the current version indicates a breaking change.

13. The method of claim 12, wherein the version code comprises the format x.y in any known order and wherein a change to x indicates a breaking change and a change to y indicates a non-breaking change.

14. The method of any of claims 1 to 10, wherein identifying the type of change comprises identifying using static analysis on the query whether it implements a non-breaking change or a breaking change.

15. Apparatus configured to carry out a method according to any of claims 1 to 14, the apparatus comprising one or more processors or special-purpose computing hardware.
